(19) Europäisches Patentamt / European Patent Office / Office européen des brevets

(11) **EP 3 201 825 B1**

(12) **FASCICULE DE BREVET EUROPEEN**

(45) Date de publication et mention
de la délivrance du brevet:
**19.06.2019  Bulletin 2019/25**

(21) Numéro de dépôt: **15788138.4**

(22) Date de dépôt: **02.10.2015**

(51) Int Cl.:
***G06K 7/10*** *(2006.01)*

(86) Numéro de dépôt international:
**PCT/FR2015/052653**

(87) Numéro de publication internationale:
**WO 2016/051112 (07.04.2016 Gazette 2016/14)**

(54) **PROCÉDÉ DE DISCRIMINATION DE TAGS RFID EN MOUVEMENT DE TAGS RFID STATIQUES**

VERFAHREN ZUR UNTERSCHEIDUNG VON RFID-ETIKETTEN IN BEWEGUNG VON STATISCHEN RFID-ETIKETTEN

METHOD OF DISCRIMINATING RFID TAGS IN MOTION FROM STATIC RFID TAGS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **03.10.2014  FR 1459488**

(43) Date de publication de la demande:
**09.08.2017   Bulletin 2017/32**

(73) Titulaires:
• **Tagsys**
**13400 Aubagne (FR)**
• **Sorbonne Université**
**75006 Paris (FR)**
• **Centre National de la Recherche Scientifique**
**75016 Paris (FR)**
• **Université Amiens Picardie Jules Verne**
**80025 Amiens Cedex 1 (FR)**

(72) Inventeurs:
• **LOUSSERT, Christophe**
**13090 Aix en Provence (FR)**

• **KERVELLA, Brigitte**
**80470 Saveuse (FR)**
• **ZANCANARO, Mario Antônio**
**06220 Vallauris le Golfe Juan (FR)**
• **PEREIRA FONSECA, Mauro Sergio**
**82.010-070 Curitiba (BR)**
• **AKRE, Niamba Jean-Michel**
**93220 Gagny, (FR)**
• **FLADENMULLER, Anne**
**92100 Boulogne (FR)**
• **BAEY, Sébastien**
**92160 Antony (FR)**

(74) Mandataire: **Novagraaf Technologies**
**12 place des Halles Saint Louis**
**56100 Lorient (FR)**

(56) Documents cités:
**EP-A1- 1 734 662       WO-A1-2009/055839**
**WO-A2-2011/009767**

## Description

### Domaine technique

La présente invention concerne un procédé et un système permettant de discriminer des tags en mouvement de tags statiques. L'invention trouve des applications dans le domaine du suivi de marchandises ou d'objets équipé(e)s de tags RFID.

### Etat de la technique

Il est connu de géo-localiser des marchandises en les équipant de tags RFID interrogeables à distance par des stations de lecture. Les tags RFID peuvent être lus à différents stades du processus de la fabrication ou de la livraison des marchandises. Ils sont par exemple lus à la sortie de l'unité de fabrication pour déterminer les marchandises qui sortent de cette unité et à l'arrivée dans l'entrepôt d'un client pour déterminer les marchandises qui arrivent chez le client.

Ces marchandises sont généralement empilées dans des cartons et les cartons sont déplacés au moyen de convoyeurs au sein de l'unité de fabrication ou de l'entrepôt de réception. L'identification des marchandises entrantes ou sortantes est effectuée alors qu'elles sont présentes sur le convoyeur et qu'elles sont en mouvement. La difficulté est alors de ne lire, avec une station de lecture disposée à proximité du convoyeur, que les tags en mouvement présents sur le convoyeur et non les tags éventuellement présents dans le milieu environnant du convoyeur. En effet, les signaux servant à la lecture des tags étant des signaux UHF, il est très difficile de limiter la zone de lecture à un volume bien défini autour du convoyeur du fait de la réflexion des signaux UHF sur des parois du milieu environnant et de la génération de multi-trajets. Les différents trajets des signaux de réponse d'un tag peuvent alors s'additionner et laisser penser que ce tag est dans la zone de lecture. Il en résulte que certains tags statiques distants du convoyeur peuvent être lus comme étant présents sur le convoyeur. Le document WO 2011/009767 A2 divulgue un tel procédé.

Pour réduire ces erreurs, il est possible de faire transiter les marchandises présentes sur le convoyeur à travers un tunnel métallique et de placer les antennes de la station de lecture à l'intérieur de ce tunnel. Cependant, des erreurs subsistent car les signaux UHF peuvent rentrer et sortir du tunnel par ses deux extrémités.

Le seul moyen efficace connu permettant de lire uniquement les tags en mouvement sur le convoyeur est d'instaurer une zone de sécurité complètement dégagée (exempte de tags et de parois) d'environ 50 m$^2$ autour de la station de lecture, ce qui nécessite d'avoir de la place.

Un autre problème est également de pouvoir discriminer les tags présents dans un carton par rapport à d'autres tags présents dans d'autres cartons disposés en aval ou en amont sur le convoyeur. Une solution simple consiste à espacer les cartons sur le convoyeur, avec un espace de 10 mètres environ entre deux cartons consécutifs, ce qui n'est pas du tout acceptable en termes de rendement de convoyage.

Pour remédier à ce problème, il a été proposé, dans la demande internationale WO2009/055839 déposée par la présente Demanderesse, d'analyser temporellement le niveau RSSI (pour Received Signal Strength Indication en langue anglaise) des signaux de réponse des tags afin de déterminer les tags en mouvement et les tags statiques. Il a été constaté que les tags en mouvement présentaient chacun un pic RSSI lors de leur passage devant une station de lecture alors que le niveau RSSI des tags statiques était plutôt stationnaire. Par ailleurs, les tags en mouvement présentant des pics RSSI simultanés sont les tags contenus dans un même carton. Cette détection par analyse temporelle des niveaux RSSI des tags a permis de réduire la distance entre deux cartons consécutifs et la faire passer de 10 mètres à 2 mètres. Cependant, dans certaines situations, des tags statiques peuvent présenter un pic RSSI et être comptabilisé comme tags en mouvement. En effet, certains changements dans l'environnement (une porte qui s'ouvre, une personne qui se déplace, ...) peuvent créer, à un instant donné, des interférences constructives (addition de plusieurs trajets) qui engendrent alors un pic RSSI. La seule solution pour éviter cela reste donc l'instauration de la zone de sécurité de 50 m$^2$.

### Résumé de l'invention

Un but de l'invention est de proposer un procédé et un système permettant de différencier de manière fiable des tags en mouvement de tags statiques sans nécessiter de zone de sécurité autour de la station de lecture.

A cet effet, l'invention propose d'utiliser au moins deux stations de lecture distantes placées le long du trajet en mouvement émettant chacune des signaux d'interrogation propres et de vérifier si l'émission de ces deux signaux d'interrogation provoquent le même événement, par exemple la réception d'un signal de réponse du tag par chacune des stations de lecture, la présence d'un pic RSSI ou l'augmentation de la phase entre le signal d'interrogation émis et le signal de réponse reçu. En effet, les tags statiques qui posent problème sont ceux qui, à un instant donné, engendrent des interférences constructives au niveau de la station de lecture. Ce phénomène apparait aléatoirement et la probabilité qu'il réapparaisse une seconde fois au niveau d'une seconde station de lecture est très faible. Par conséquent, si cet événement (réception d'un signal de réponse du tag, pic RSSI ou augmentation de la phase) n'est pas détecté au niveau d'une des deux stations de lecture, ce tag peut être considéré comme statique.

Plus précisément, l'invention a pour objet un procédé de traitement d'une pluralité de tags RFID destiné à discriminer des tags en mouvement de tags statiques, selon la revendication 1.

Selon l'invention, on effectue ainsi un premier tri à partir des signaux de réponse reçus par les stations de lecture. On entend par signal de réponse reçu par une station de lecture un signal de réponse qui peut être lu par la station de lecture. Le signal de réponse reçu par une station de lecture est donc un signal de réponse dont le niveau est supérieur au niveau de recevabilité et de lecture de la station de lecture. Les tags pour lesquels seule l'une des deux stations de lecture reçoit un signal de réponse sont soit des tags statiques présents dans la zone de lecture de l'une des stations de lecture, soit des tags statiques dans présents en dehors de la zone de lecture des stations et dont le signal de réponse reçu provient d'un ou plusieurs trajets indirects. La probabilité que les conditions soient réunies pour qu'un tel trajet indirect soit établi entre un tag statique situé en dehors de la zone de lecture et l'une des stations de lecture est faible. De plus, la probabilité que ce phénomène se reproduise à l'identique en deux points de lecture distincts (correspondant aux deux stations de lecture) est encore plus improbable et rare. Ce premier tri permet donc de discriminer une première partie des tags statiques.

La méthode de reconnaissance par apprentissage permet de discriminer les tags en mouvement des autres tags statiques.

Selon un mode de réalisation particulier, la méthode de reconnaissance par apprentissage est la méthode des k plus proches voisins, k étant un entier supérieur ou égal 1. Les tags lus par les deux stations de lecture sont discriminés par une méthode des k plus proches voisins.

Selon un mode de réalisation particulier, la méthode des k plus proches voisins comprend les étapes suivantes:

- une étape d'apprentissage sur une population de N tags, dits d'apprentissage, dont l'état, statique ou en mouvement, est connu, dans laquelle un signal représentatif des signaux de réponse reçus par lesdites première et deuxième stations de lecture pour chacun desdits N tags d'apprentissage sont enregistrés,
- une étape de sélection des k tags d'apprentissage dont les signaux de réponse enregistrés sont les plus proches des signaux de réponse reçus pour un tag courant selon un critère de distance prédéterminé, et
- une étape de détermination de l'état statique ou en mouvement du tag courant à partir de l'état des k tags d'apprentissage sélectionnés.

Dans ce mode de réalisation, k est avantageusement un nombre impair. Si, parmi les k tags d'apprentissage sélectionnés, le nombre de tags en mouvement est supérieur au nombre de tags statiques, alors le tag courant est considéré comme un tag en mouvement. Dans le cas inverse, il est considéré comme un tag statique.

En variante, k est un entier pair ou impair. On détermine l'état, statique ou en mouvement, du tag courant à partir de la distance calculée pour les k tags d'apprentissage.

Selon un mode de réalisation particulier, pour sélectionner les k tags d'apprentissage, lesdits signaux de réponse du tag courant et les signaux de réponse des N tags d'apprentissage sont comparés sur une fenêtre temporelle de durée prédéterminée synchronisée sur une référence temporelle prédéterminée.

Selon un mode de réalisation particulier, la durée de la fenêtre temporelle est déterminée en fonction de la vitesse des tags en mouvement et/ou de leur distance minimale avec lesdites première et deuxième stations de lecture. Ce mode de réalisation est plus particulièrement adapté au cas où les tags en mouvement se déplacent sur un convoyeur à vitesse constante.

Selon un mode de réalisation particulier, la référence temporelle est le sommet d'un pic du niveau RSSI des signaux de réponse et la fenêtre temporelle est centrée sur ledit sommet.

Selon un autre mode de réalisation, la référence temporelle est fournie par un dispositif en amont des desdites première et deuxième stations de lecture, ladite référence temporelle repérant le début de la fenêtre temporelle.

Selon un mode de réalisation particulier, la fenêtre temporelle étant découpée en M sous-fenêtres, l'étape d'apprentissage comprend en outre, pour chacun des tags d'apprentissage, une étape de calcul de valeurs caractéristiques représentatives des signaux de réponse reçus pendant chacune desdites M sous-fenêtres par lesdites première et deuxième stations de lecture, et l'étape de comparaison des signaux de réponse d'un tag courant et des signaux de réponse des tags d'apprentissage comprend :

- une étape de calcul, pour le tag courant, de valeurs caractéristiques représentatives des signaux de réponse reçus pendant chacune desdites M sous-fenêtres par lesdites première et deuxième stations de lecture, et
- une étape de calcul de distance entre les valeurs caractéristiques du tag courant et les valeurs statistiques de chacun des N tags d'apprentissage,

les k tags d'apprentissage sélectionnés étant les k tags d'apprentissage dont les distances calculées sont les plus faibles.

Selon un mode de réalisation particulier, la valeur caractéristique calculée pour chacune des sous-fenêtres appartient au groupe suivant :

- la moyenne du niveau RSSI des signaux de réponse du tag sur ladite sous-fenêtre;
- la valeur maximale du niveau RSSI des signaux de réponse du tag sur ladite sous-fenêtre;
- l'écart type du niveau RSSI des signaux de réponse du tag sur ladite sous-fenêtre;
- la différence entre la valeur maximale et la valeur minimale du niveau RSSI des signaux de réponse du tag sur ladite sous-fenêtre;
- la différence de phase entre les premier et deuxième signaux d'interrogation et les signaux de réponse reçus sur ladite sous-fenêtre.

La valeur caractéristique peut également être une combinaison de ces différentes valeurs ou être étendue à d'autres valeurs caractéristiques.

Selon un mode de réalisation particulier, les sous-fenêtres ont des durées distinctes. La durée de ces sous-fenêtres est définie pendant la phase d'apprentissage.

D'autres avantages pourront encore apparaître à l'homme du métier à la lecture des exemples ci-dessous, illustrés par les figures annexées, donnés à titre illustratif.

**Brève description des figures**

- La figure 1 représente un organigramme des étapes du procédé de l'invention;

- La figure 2 est un exemple de dispositif pour la mise en oeuvre du procédé de l'invention;

- Les Figures 3A à 3C sont des exemples de courbes RSSI de tags en mouvement ou statiques; et

- La figure 4 est un schéma illustrant la méthode des k plus proches voisins.

**Description détaillée de l'invention**

L'invention vise à discriminer les tags statiques des tags en mouvement. Elle vise notamment à filtrer les tags statiques ayant un signal de réponse proche de celui d'un tag en mouvement.

En UHF, le niveau RSSI d'un signal de réponse d'un tag en mouvement varie généralement en fonction de la distance qui le sépare de la station de lecture. Il présente classiquement un pic au passage du tag dans le plan équatorial de l'antenne de la station de lecture. Pour les tags statiques, le niveau RSSI du signal de réponse est plus variable. Certains tags statiques dits "faciles" présentent un signal de réponse assez stable (sans pic RSSI). Ces tags sont simples à discriminer. D'autres tags statiques dits "difficiles" peuvent présenter à un moment donné une courbe RSSI sensiblement similaire à celle d'un tag en mouvement (en raison d'interférences constructives). La présence de tags statiques difficiles est fréquente dans les environnements indoor (à l'intérieur d'un bâtiment). Ces phénomènes d'interférences constructives sont des phénomènes aléatoires. Cela signifie donc que, si ce phénomène apparait en un point de lecture, la probabilité qu'il se reproduise en un autre point de lecture est faible.

C'est pourquoi, selon l'invention, il est proposé d'utiliser au moins deux points de lecture le long du trajet des tags en mouvement pour effectuer un premier filtrage des tags qui ne sont lus que par une station de lecture. Cela permet de filtrer déjà une partie des tags statiques difficiles dont le signal de réponse ne devrait normalement pas être lu par les stations de lecture mais qui, par un phénomène d'interférences constructives, répondent à l'une des stations de lecture. Ensuite, on applique une méthode de reconnaissance de formes (par exemple kNN méthode des k plus proches voisins) sur les tags lus par les deux stations de lecture pour discriminer, dans les tags restants, les tags en mouvement des tags statiques.

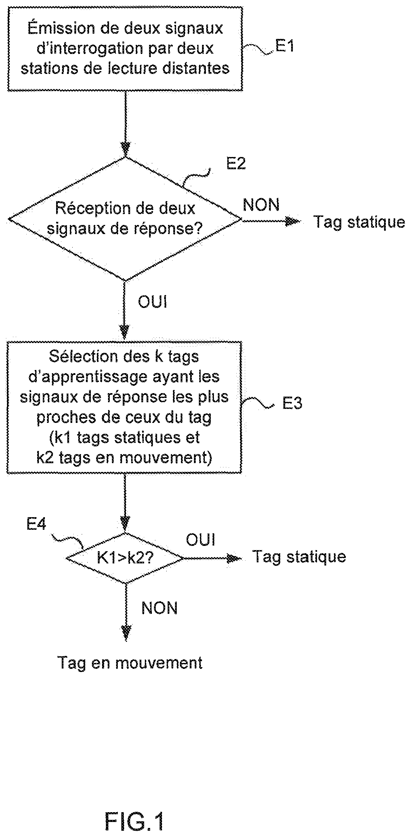

La figure 1 représente un organigramme du procédé de l'invention.

Selon une première étape, référencée E1, de l'invention, deux stations de lecture A et B distantes disposées le long du trajet des tags en mouvement émettent chacune un signal d'interrogation propre. Les stations de lecture A et B sont espacées d'une distance d et émettent leur signal d'interrogation sur un canal de fréquence propre, par exemple 865,7 MHz pour la station A et 866,9 MHz pour la station B.

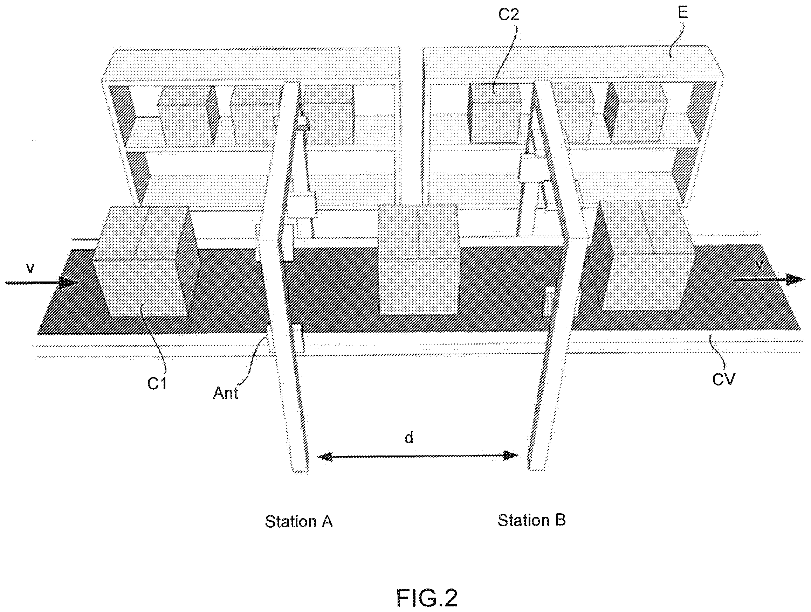

Une telle configuration des stations de lecture est représentée schématiquement sur la figure 2. Des cartons C1 de tags en mouvement sont disposés sur la bande de convoyage d'un convoyeur CV se déplaçant à une vitesse constante V. Les stations A et B sont disposées le long du convoyeur et sont séparées par une distance d. Les stations sont représentées schématiquement par deux arches à travers lesquelles passe ledit convoyeur, ces arches portant les antennes ANT des stations de lecture. D'autres cartons C2, placés sur des étagères E disposées à proximité du convoyeur, contiennent des tags statiques. D'autres cartons C2 non visibles sur la figure et placés à une distance plus élevée des stations de lecture sont aussi présents. L'invention a pour but de discriminer les tags en mouvement présents dans les cartons C1 des tags statiques présents dans les cartons C2.

Lorsque les stations A et B émettent chacune leur signal d'interrogation, les tags qui les captent répondent à ces signaux d'interrogation en renvoyant un signal de réponse sur le même canal de fréquence. Dans la suite de la description, on désigne par premier signal d'interrogation le signal d'interrogation émis par la station A et par deuxième signal d'interrogation le signal d'interrogation émis par la station B.

Selon une deuxième étape, référencée E2 dans l'organigramme de la figure 1, on effectue un premier tri des tags en répertoriant les tags pour lesquels seule une des deux stations de lecture a reçu un signal de réponse. Ces tags sont des tags statiques.

S'agissant des tags pour lesquels les stations ont chacune reçu un signal de réponse, on applique une méthode des k plus proche voisins sur ces derniers pour déterminer s'il s'agit de tags statiques ou de tags en mouvement. Selon cette méthode, les signaux de réponse reçus sont comparés à des signaux de réponse de tags dont l'état, statique ou en mouvement, est connu. On peut alors déduire, à partir des tags ayant un signal de réponse proche de celui du tag courant, l'état du tag courant.

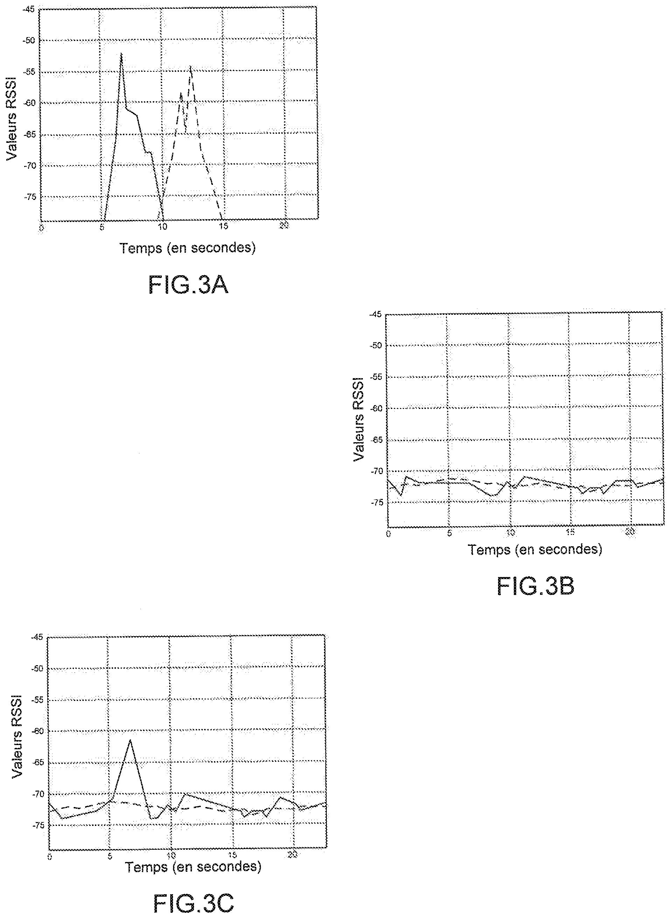

Les figures 3A et 3B présentent des courbes de signaux de réponse de tags en mouvement et de tags statiques faciles. Ces courbes représentent le niveau RSSI des signaux de réponse en fonction du temps. Le signal de réponse reçu par la station A est représenté en trait continu et le signal de réponse reçu par la station B est représenté par des tirets.

La figure 3A montre les signaux de réponse reçus par les stations A et B pour un tag en mouvement classique. Chacun de ces signaux comporte un pic RSSI. Le pic RSSI du premier signal de réponse (trait continu) correspond au passage du tag dans le plan équatorial des antennes de la station A et le pic RSSI du deuxième signal de réponse (en tirets) correspond au passage du tag dans le plan équatorial des antennes de la station B. Le décalage temporel entre ces deux pics est fonction de la vitesse du convoyeur et de la distance entre les deux stations.

La figure 3B montre les signaux de réponse reçus d'un tag statique facile. Les deux signaux de réponse ne comportent pas de pic RSSI et sont quasi-stationnaires.

La figure 3C illustre le cas d'un tag dont l'état est plus difficile à déterminer car l'un des signaux de réponse présente un pic RSSI et l'autre signal de réponse est stationnaire.

La méthode kNN va permettre de déterminer, quels que soient les signaux de réponses reçus pour un tag, de déterminer son état à partir de l'état de ses plus proches voisins, k étant un entier supérieur ou égal à 1.

La méthode kNN proposée comporte essentiellement une étape préalable d'apprentissage, une étape de sélection de k tags d'apprentissage et une étape de détermination de l'état statique ou en mouvement du tag courant à partir de l'état des k tags d'apprentissage sélectionnés.

L'étape d'apprentissage est effectuée préalablement hors ligne et n'apparait donc pas dans l'organigramme de la figure 1. Elle est réalisée sur une population de N tags, dits d'apprentissage, dont l'état, statique ou en mouvement, est connu à l'avance. Cette étape d'apprentissage est réalisée dans le lieu où sera mis en oeuvre le procédé de l'invention, avec les mêmes stations de lecture et, de préférence, dans les mêmes conditions d'utilisation. Pour chacun de ces tags d'apprentissage, on enregistre les signaux de réponse reçus par les stations de lecture A et B.

Selon un mode de réalisation particulier, les signaux de réponse enregistrés sont par exemple des fichiers de points représentatifs de la courbe RSSI des signaux de réponse du tag sur une fenêtre temporelle de durée prédéterminée synchronisée sur une référence temporelle prédéterminée. Le fichier de points d'un tag comporte par exemple des couples (niveau RSSI du point, date du point) pour différents points des deux courbes RSSI correspondant aux deux signaux de réponse reçus pour le tag sur la fenêtre temporelle choisie.

La durée de la fenêtre temporelle est déterminée en fonction de la vitesse des tags en mouvement et/ou de la distance minimale entre les stations de lecture. Par ailleurs, la référence temporelle est par exemple le sommet du premier pic RSSI, le début de la fenêtre temporelle étant alors calé par rapport à cette référence temporelle. On peut par exemple définir une fenêtre temporelle ayant une durée de 20 secondes et dont le début commence 5 secondes avant le premier pic RSSI.

La référence temporelle peut aussi être fournie par le passage d'un carton C1 devant une cellule photoélectrique placée en amont de la première station de lecture (station A).

L'étape de sélection de k tags d'apprentissage, référencée E3 dans la figure 1, consiste à sélectionner les k tags d'apprentissage dont les signaux de réponse sont les plus proches des signaux de réponse du tag courant selon un critère de distance prédéterminé. L'entier k est avantageusement un nombre impair.

Pour effectuer cette sélection, les signaux de réponse du tag courant et les signaux de réponse des N tags d'apprentissage sont comparés sur la fenêtre temporelle prédéterminée. Les signaux sont comparés en comparant leurs fichiers de points.

Les fichiers de points est l'union de points du signal de réponse reçu par la station A et des points du signal de réponse reçu par la station B. Si deux points ont la même date, on génère éventuellement un point qui est la moyenne des deux points ayant la même date ou on les conserve.

Selon un mode de réalisation particulier, la fenêtre temporelle est découpée en M sous-fenêtres distinctes. L'étape de comparaison est alors réalisée sur chacune des sous-fenêtres. Ces sous-fenêtres sont de préférence définies pendant l'étape d'apprentissage. Chacune des sous-fenêtres est avantageusement déterminée pour comporter un pic tout entier ou aucun pic.

Pour réaliser la comparaison, on calcule, dans une première sous-étape, une valeur caractéristique représentative des deux signaux de réponse reçus pour le tag considéré pendant chacune des M sous-fenêtres. Cette valeur statistique est par exemple la moyenne du niveau RSSI sur ladite sous-fenêtre, la valeur maximum du niveau RSSI sur cette sous-fenêtre, l'écart type du niveau RSSI des signaux de réponse du tag sur ladite sous-fenêtre ou la différence entre la valeur maximale et la valeur minimale du niveau RSSI des signaux de réponse du tag sur ladite sous-fenêtre.

D'autres valeurs caractéristiques non liées au niveau RSSI peuvent être employées, telles que la différence de phase entre les signaux d'interrogation et les signaux de réponse reçus. Cette différence de phase varie lorsque le tag et en mouvement.

Pour les tags d'apprentissage, cette étape de calcul d'une valeur caractéristique est avantageusement réalisée pendant la phase d'apprentissage.

Selon une deuxième sous-étape, on calcule une distance entre les valeurs statistiques des signaux de réponse du tag courant et les valeurs statistiques des signaux de réponse des N tags d'apprentissage.

Cette distance est par exemple une distance Euclidienne, une distance de Minkowski ou une distance de Mahalanobis.

Prenons l'exemple d'une fenêtre temporelle comportant 5 sous-fenêtres. $a_i$ désigne la valeur caractéristique des signaux de réponse reçus pour le tag courant pendant la $i^{ième}$ sous-fenêtre temporelle, avec $i \in \{1,2,3,4,5\}$. $b_i$ désigne la valeur statistique des signaux de réponse reçus pour un tag d'apprentissage pendant la $i^{ième}$ sous-fenêtre temporelle.

On calcule la distance euclidienne e suivante entre le tag courant et chacun des N tags d'apprentissage :

$$e = \sqrt{|a_1 - b_1|^2 + |a_2 - b_2|^2 + |a_3 - b_3|^2 + |a_4 - b_4|^2 + |a_5 - b_5|^2}$$

A noter que si, dans certaines sous-fenêtres, le niveau RSSI est trop faible pour être mesuré, on affecte à ces sous-fenêtres une valeur caractéristique dite de remplacement prédéfinie dont la valeur est définie pour ne pas avoir trop d'impact sur la distance euclidienne calculée.

A l'issue de l'étape de calcul de la distance euclidienne, les k=k1+k2 tags d'apprentissage dont la distance e est la plus faible sont sélectionnés. L'état, statique ou en mouvement, de ces tags d'apprentissage est connu. k1 désigne le nombre de tags, parmi les k tags d'apprentissage, qui sont statiques. k2 désigne le nombre de tags, parmi les k tags d'apprentissage, qui sont en mouvement. k étant de préférence un nombre impair, k1 est différent de k2.

Au final, si k1>k2 (étape E4 de la figure 1), le tag courant est considéré comme étant statique et, si k1<k2, le tag courant est considéré comme étant en mouvement.

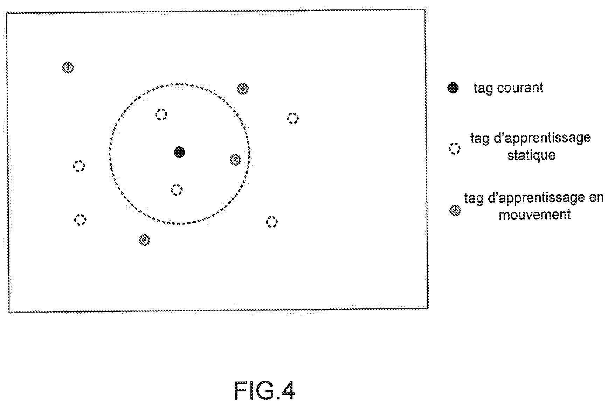

Cette détermination de l'état du tag courant est illustrée par le schéma de la figure 4. On suppose k=3. On sélectionne les 3 tags d'apprentissage dont les signaux de réponse sont les plus proches des signaux de réponse du tag courant. Dans l'exemple de la figure 4, 2 tags d'apprentissage parmi les trois tags d'apprentissage sélectionnés sont des tags statiques. Par conséquent, le tag courant sera considéré comme un tag statique.

En variante, on détermine l'état, statique ou en mouvement, du tag courant en fonction de la distance euclidienne avec les k tags d'apprentissage. Dans ce cas, k est indifféremment pair ou impair.

Prenons l'exemple de k=3 tags d'apprentissage. Les distances euclidiennes e calculées entre le tag courant et ces 3 tags d'apprentissage sont les suivantes:

- Tag d'apprentissage 1 en mouvement : e=0,23
- Tag d'apprentissage 2 statique : e=5,34
- Tag d'apprentissage 3 statique : e= 3,22.

Bien que, parmi les 3 tags d'apprentissage les plus proches, deux d'entre eux soient statiques, le tag courant est considéré comme un tag en mouvement car la distance le séparant du tag d'apprentissage 1 en mouvement est bien plus que celles le séparant des tags d'apprentissage 2 et 3 qui sont statiques.

Bien entendu, dans ce mode de réalisation, k peut être un entier pair.

Les modes de réalisation décrits ci-dessus ont été donnés à titre d'exemple. Il est évident pour l'homme de l'art qu'ils peuvent être modifiés, notamment quant au type de courbe de signal de réponse analysé, au critère de distance employé, au nombre de tags d'apprentissage utilisé.

On pourrait notamment utiliser des courbes de variation de phase, au lieu de courbes de niveau RSSI, pour déterminer l'état des tags.

Par ailleurs, l'invention a été décrite dans le cadre de tags en mouvement mus par un convoyeur. Bien entendu, dans d'autres applications, les tags en mouvement peuvent être déplacés par n'importe quel autre moyen, par exemple par un véhicule ou un chariot.

L'invention a également été décrite avec un mode de réalisation utilisant une méthode des k plus proches voisins comme méthode de reconnaissance par apprentissage. Bien entendu, toute autre méthode de reconnaissance peut être employée à la place de la méthode kNN.

**Revendications**

1. Procédé de traitement d'une pluralité de tags RFID destiné à discriminer des tags en mouvement de tags statiques, **caractérisé en ce qu'**il comporte les étapes suivantes:

   - émettre (E1), à partir de première et deuxième stations de lecture (A, B) distantes placées le long du trajet des tags en mouvement, des premier et deuxième signaux radiofréquence d'interrogation à destination de ladite pluralité de tags RFID,
   - déterminer (E2,E3,E4) si lesdites première et deuxième stations de lecture reçoivent des signaux de réponse de tags en réponse respectivement auxdits premier et deuxième signaux radiofréquence d'interrogation de sorte que, pour un tag courant, si une seule desdites première et deuxième stations de lecture reçoit un signal de réponse dudit tag courant, ledit tag courant est un tag statique, et si lesdites première et deuxième stations de lecture reçoivent chacune un signal de réponse dudit tag courant, on applique une méthode des k plus proches voisins, k étant un entier supérieur ou égal 1, pour déterminer si le tag courant est statique ou en mouvement,

   laquelle méthode des k plus proches voisins comprend les étapes suivantes :

   - une étape d'apprentissage sur une population de N tags, dits d'apprentissage, dont l'état, statique ou en mouvement, est connu, dans laquelle un signal représentatif des signaux de réponse reçus par lesdites première et deuxième stations de lecture pour chacun desdits N tags d'apprentissage sont enregistrés,
   - une étape (E3) de sélection des k tags d'apprentissage dont les signaux de réponse enregistrés sont les plus proches des signaux de réponse reçus pour un tag courant selon un critère de distance prédéterminé, et
   - une étape (E4) de détermination de l'état statique ou en mouvement du tag courant à partir de l'état des k tags d'apprentissage sélectionnés.

2. Procédé selon la revendication 1, **caractérisé en ce que** k est un nombre impair.

3. Procédé selon la revendication 1 ou 2, **caractérisé en ce que**, pour sélectionner les k tags d'apprentissage, lesdits signaux de réponse du tag courant et les signaux de réponse des N tags d'apprentissage sont comparés sur une fenêtre temporelle de durée prédéterminée synchronisée sur une référence temporelle prédéterminée.

4. Procédé selon la revendication 3, **caractérisé en ce que** la durée de la fenêtre temporelle est déterminée en fonction de la vitesse des tags en mouvement et/ou de leur distance minimale avec lesdites première et deuxième stations de lecture.

5. Procédé selon la revendication 3 ou 4, **caractérisé en ce que** la référence temporelle est le sommet d'un pic de niveau RSSI des signaux de réponse et la fenêtre temporelle est centrée sur ledit sommet.

6. Procédé selon la revendication 3 ou 4, **caractérisé en ce que** la référence temporelle est fournie par un dispositif en amont desdites première et deuxième stations de lecture, ladite référence temporelle repérant le début de la fenêtre temporelle.

7. Procédé selon l'une quelconque des revendications 3 à 6, **caractérisé en ce que** la fenêtre temporelle étant découpée en M sous-fenêtres, l'étape d'apprentissage comprend en outre, pour chacun des tags d'apprentissage, une étape de calcul de valeurs caractéristiques représentatives des signaux de réponse reçus pendant chacune desdites M sous-fenêtres par lesdites première et deuxième stations de lecture, et l'étape de comparaison des signaux de réponse d'un tag courant et des signaux de réponse des tags d'apprentissage comprend :

- une étape de calcul, pour le tag courant, de valeurs caractéristiques représentatives des signaux de réponse reçus pendant chacune desdites M sous-fenêtres par lesdites première et deuxième stations de lecture, et
- une étape de calcul de distance entre les valeurs caractéristiques du tag courant et les valeurs statistiques de chacun des N tags d'apprentissage,

les k tags d'apprentissage sélectionnés étant les k tags d'apprentissage dont les distances calculées sont les plus faibles.

8. Procédé selon la revendication 7, **caractérisé en ce que** la valeur caractéristique calculée pour chacune des sous-fenêtres appartient au groupe suivant :

- la moyenne du niveau RSSI des signaux de réponse du tag sur ladite sous-fenêtre ;
- la valeur maximale du niveau RSSI des signaux de réponse du tag sur ladite sous-fenêtre ;
- l'écart type du niveau RSSI des signaux de réponse du tag sur ladite sous-fenêtre ;
- la différence entre la valeur maximale et la valeur minimale du niveau RSSI des signaux de réponse du tag sur ladite sous-fenêtre ;
- la différence de phase entre les premier et deuxième signaux d'interrogation et les signaux de réponse reçus sur ladite sous-fenêtre.

9. Procédé selon la revendication 7 ou 8, **caractérisé en ce que** les sous-fenêtres ont des durées distinctes.


**Patentansprüche**

1. Verfahren zur Verarbeitung einer Vielzahl von RFID-Etiketten, das dazu vorgesehen ist, in Bewegung befindliche Etiketten von statischen Etiketten zu unterscheiden, **dadurch gekennzeichnet, dass** es die folgenden Schritte umfasst:

- Senden (E1), ausgehend von beabstandeten ersten und zweiten Lesestationen (A, B), die entlang der Bahn der in Bewegung befindlichen Etiketten platziert sind, von ersten und zweiten Funkfrequenz-Abfragesignalen an die Vielzahl von RFID-Etiketten,
- Bestimmen (E2, E3, E4), ob die erste und zweite Lesestation Antwortsignale von Etiketten in Antwort auf jeweils das erste und zweite Funkfrequenz-Abfragesignal empfangen, derart, dass wenn für ein aktuelles Etikett eine einzige der ersten und zweiten Lesestation ein Antwortsignal des aktuellen Etiketts empfängt, das aktuelle Etikett ein statisches Etikett ist, und wenn die erste und zweite Lesestation jede ein Antwortsignal des aktuellen Etiketts empfangen, eine Methode der k nächsten Nachbarn angewendet wird, wobei k eine ganze Zahl größer oder gleich 1 ist, um zu bestimmen, ob das aktuelle Etikett statisch oder in Bewegung befindlich ist,

wobei die Methode der k nächsten Nachbarn die folgenden Schritte umfasst:

- einen Schritt des Lernens an einer Population von N sogenannten Lernetiketten, deren Zustand, statisch oder in Bewegung befindlich, bekannt ist, wobei ein Signal, das für die von der ersten und zweiten Lesestation empfangenen Antwortsignale repräsentativ ist, für jedes der N Lernetiketten aufgezeichnet wird,
- einen Schritt (E3) des Auswählens der k Lernetiketten, deren aufgezeichnete Antwortsignale den für ein aktuelles Etikett empfangenen Antwortsignalen am nächsten sind, gemäß einem vorbestimmten Abstandskriterium, und
- einen Schritt (E4) des Bestimmens des Zustands, statisch oder in Bewegung befindlich, des aktuellen Etiketts ausgehend vom Zustand der k ausgewählten Lernetiketten.

2. Verfahren nach Anspruch 1, **dadurch gekennzeichnet, dass** k eine ungerade Zahl ist.

3. Verfahren nach Anspruch 1 oder 2, **dadurch gekennzeichnet, dass** um die k Lernetiketten auszuwählen, die Antwortsignale des aktuellen Etiketts und die Antwortsignale der N Lernetiketten über ein Zeitfenster von vorbestimmter Dauer verglichen werden, das über eine vorbestimmte Zeitreferenz synchronisiert ist.

4. Verfahren nach Anspruch 3, **dadurch gekennzeichnet, dass** die Dauer des Zeitfensters in Abhängigkeit von der Geschwindigkeit der in Bewegung befindlichen Etiketten und/oder von deren Minimalabstand zur ersten und zweiten Lesestation bestimmt wird.

**5.** Verfahren nach Anspruch 3 oder 4, **dadurch gekennzeichnet, dass** die Zeitreferenz der Scheitel einer RSSI-Pegelspitze der Antwortsignale ist, und das Zeitfenster am Scheitel zentriert ist.

**6.** Verfahren nach Anspruch 3 oder 4, **dadurch gekennzeichnet, dass** die Zeitreferenz von einer Vorrichtung stromaufwärts der ersten und zweiten Lesestation geliefert wird, wobei die Zeitreferenz den Anfang des Zeitfensters markiert.

**7.** Verfahren nach einem der Ansprüche 3 bis 6, **dadurch gekennzeichnet, dass** wenn das Zeitfenster in M Teilfenster unterteilt ist, der Schritt des Lernens weiter für jedes der Lernetiketten einen Schritt des Berechnens von charakteristischen Werten umfasst, die für die während jedem der M Teilfenster von der ersten und zweiten Lesestation empfangenen Antwortsignale repräsentativ sind, und der Schritt des Vergleichens der Antwortsignale eines aktuellen Etiketts und der Antwortsignale der Lernetiketten umfasst:

- einen Schritt des Berechnens, für das aktuelle Etikett, von charakteristischen Werten, die für die während jedem der M Teilfenster von der ersten und zweiten Lesestation empfangenen Antwortsignale repräsentativ sind, und
- einen Schritt der Abstandsberechnung zwischen den charakteristischen Werten des aktuellen Etiketts und den statistischen Werten jedes der N Lernetiketten,

wobei die k ausgewählten Lernetiketten die k Lernetiketten sind, deren berechnete Abstände am geringsten sind.

**8.** Verfahren nach Anspruch 7, **dadurch gekennzeichnet, dass** der für jedes der Teilfenster berechnete charakteristische Wert zur folgenden Gruppe gehört:

- das Mittel des RSSI-Pegels der Antwortsignale des Etiketts über das Teilfenster;
- der Maximalwert des RSSI-Pegels der Antwortsignale des Tags über das Teilfenster;
- die Standardabweichung des RSSI-Pegels der Antwortsignale des Etiketts über das Teilfenster;
- die Differenz zwischen dem Maximalwert und dem Minimalwert des RSSI-Pegels der Antwortsignale des Etiketts über das Teilfenster;
- die Phasendifferenz zwischen dem ersten und zweiten Abfragesignal und den empfangenen Antwortsignalen über das Teilfenster.

**9.** Verfahren nach Anspruch 7 oder 8, **dadurch gekennzeichnet, dass** die Teilfenster unterschiedliche Dauern aufweisen.

**Claims**

**1.** Method for processing a plurality of RFID tags, intended to discriminate between moving tags and stationary tags, **characterised in that** it comprises the following steps:

- transmitting (E1), from first and second remote reading stations (A, B) placed along the path of the moving tags, a first and a second radiofrequency interrogation signal to said plurality of RFID tags,
- determining (E2, E3, E4) whether said first and second reading stations receive response signals from tags in response to said first and second radiofrequency interrogation signals, respectively, in such a way that, for a current tag, if only one of said first and second reading stations receives a response signal from said current tag, said current tag is a stationary tag, and if said first and second reading stations each receive a response signal from said current tag, a k-nearest neighbours method, k being an integer greater than or equal to 1, is used to determine whether the current tag is stationary or moving,

which k-nearest neighbours' method comprises the following steps:

- a step of learning on a population of N tags, called learning tags, the state of which, stationary or moving, is known, wherein a signal representative of the response signals received by said first and second reading stations for each of said N learning tags are recorded,
- a step (E3) of selecting the k learning tags having the recorded response signals that are the closest to the response signals received for a current tag according to a predetermined distance criterion, and
- a step (E4) of determining the stationary or moving state of the current tag on the basis of the state of the k learning tags selected.

2. Method according to claim 1, **characterised in that** k is an odd number.

3. Method according to claim 1 or 2, **characterised in that**, in order to select the k learning tags, said response signals of the current tag and the response signals of the N learning tags are compared over a time window having a predetermined length synchronised on a predetermined time reference.

4. Method according to claim 3, **characterised in that** the length of the time window is determined on the basis of the speed of the moving tags and/or their minimum distance with said first and second reading stations.

5. Method according to claim 3 or 4, **characterised in that** the time reference is the crest of a peak of the RSSI level of the response signals and the time window is centred on said crest.

6. Method according to claim 3 or 4, **characterised in that** the time reference is provided by a device upstream of said first and second reading stations, said time reference marking the beginning of the time window.

7. Method according to any of claims 3 to 6, **characterised in that** the time window is divided into M sub-windows, the learning step further comprises, for each of the learning tags, a step of calculating characteristic values representative of the response signals received during each of said M sub-windows by said first and second reading stations, and the step of comparing the response signals of a current tag and the response signals of the learning tags comprises:

   - a step of calculating, for the current tag, characteristic values representative of the response signals received during each of said M sub-windows by said first and second reading stations, and
   - a step of calculating distance between the characteristic values of the current tag and the stationary values of each of the N learning tags,

   the k learning tags selected being the k learning tags having the smallest calculated distances.

8. Method according to claim 7, **characterised in that** the characteristic value calculated for each of the sub-windows belongs to the following group:

   - the average of the RSSI level of the response signals of the tag over said sub-window;
   - the maximum value of the RSSI level of the response signals of the tag over said sub-window;
   - the standard deviation of the RSSI level of the response signals of the tag over said sub-window;
   - the difference between the maximum value and the minimum value of the RSSI level of the response signals of the tag over said sub-window;
   - the phase difference between the first and second interrogation signals and the response signals received over said sub-window.

9. Method according to claim 7 or 8, **characterised in that** the sub-windows have distinct lengths.

FIG.1

FIG.2

FIG.3A

FIG.3B

FIG.3C

tag courant

tag d'apprentissage statique

tag d'apprentissage en mouvement

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011009767 A2
- WO 2009055839 A